# EUROPÄISCHE PATENTSCHRIFT

(11) **EP 3 021 955 B1**
(45) Veröffentlichungstag und Bekanntmachung des Hinweises auf die Patenterteilung: **25.10.2023**
(21) Anmeldenummer: 14723344.9
(22) Anmeldetag: 16.04.2014
(51) Int. Cl.: B01D 47/00, B01D 53/14, B08B 15/00, C02F 1/20, B01D 19/00, B27N 3/00

(54) **VERFAHREN UND VORRICHTUNG ZUR REINIGUNG VON ABLUFT**
METHOD AND PLANT FOR CLEANING EFFLUENT GASES
MÉTHODE ET APPAREIL POUR PURIFIER DES GAZ EFFLUENTS

(30) Priorität: 18.07.2013 EP 13176955
(43) Veröffentlichungstag der Anmeldung: 25.05.2016
(73) Patentinhaber: Lignum Technologies AG, 9052 Niederteufen (CH)
(72) Erfinder: MUSS, Hermann, A-4872 Neukirchen (AT); WEINBERGER, Robert, A-4910 Ried im Innkreis (AT); NEUHUBER, Ernst, A-4872 Neukirchen (AT)
(74) Vertreter: Detken, Andreas
(86) Internationale Anmeldenummer: PCT/EP2014/057692
(87) Internationale Veröffentlichungsnummer: WO 2015/007408

(56) Entgegenhaltungen:
- EP-A1- 2 522 415
- WO-A1-01/74471
- WO-A1-92/00792
- US-A- 5 378 267
- US-A- 5 897 697
- US-A1- 2002 046 655

## Beschreibung

### TECHNISCHES GEBIET

Die vorliegende Erfindung betrifft ein Verfahren und eine Vorrichtung zur Reinigung der Abluft, wie sie z.B. bei der Verarbeitung von Holzwerkstoffen entsteht. Das Verfahren und die Vorrichtung eignen sich besonders für die Reinigung der Abluft bei der Herstellung von Span-, OSB-, MDF-, HDF-, HPL- und CPL-Platten in einer kontinuierlichen Presse oder von einem Trockner. Insbesondere eignen sich das Verfahren und die Vorrichtung zur Entfernung von Staub, Formaldehyd, Ameisen- und Essigsäure aus der Abluft, z.B. der Abluft der eigentlichen Presse oder der Abluft eines Trockners.

### STAND DER TECHNIK

DE 42 12 164 C2 beschreibt ein Verfahren und eine Einrichtung zur Reinigung von Pressenabluft. Die Einrichtung weist eine Baueinheit auf, welche Gase und Dämpfe absaugt. Diese Gase und Dämpfe werden dann mittels einer Waschflüssigkeit gereinigt und einem Tropfenabscheider zugeführt. Im Tropfenabscheider wird der so gereinigte Absaugluftstrom von der verunreinigten Waschflüssigkeit getrennt und strömt durch einen Absaugventilator in ein Abluftkamin. Die mit Verunreinigungen durchsetzte Waschflüssigkeit gelangt über eine Rücklaufleitung in ein Wiederaufbereitungsbecken. Dort werden schwere Stoffe mit einem Sedimenträumer ausgetragen (Sedimentation) und leichte Stoffe über eine Schwimmschlammschicht ausgetragen (Flotation). In einem geschlossenen Kreislauf wird dann die Waschflüssigkeit aus dem Wiederaufbereitungsbecken erneut in die Abluft eingesprüht.

Das in DE 42 12 164 C2 offenbarte Verfahren hat jedoch den Nachteil, dass sich die Waschflüssigkeit durch den Kreislauf konstant mit löslichen organischen Stoffen wie beispielsweise mit Formaldehyd anreichert und die Waschflüssigkeit nach einer gewissen Betriebszeit komplett ausgetauscht und dann entsorgt werden muss. Ein weiterer gravierender Nachteil ergibt sich daraus, dass das Waschen der Abluft mit der Waschflüssigkeit immer weniger effizient wird, je länger sich die Waschflüssigkeit mit löslichen Verunreinigungen angereichert hat.

Auch DE 101 00 895 C2, DE 101 00 896 C1 und EP 2 522 415 A1 beschreiben Anlagen mit einem im Wesentlichen geschlossenen Kreislauf der Waschflüssigkeit.

Waschflüssigkeit aus solchen Anlagen kann chemisch nachbehandelt werden, um die Waschleistung durch Abbau bzw. Entfernung der organischen Stoffe aufrecht zu erhalten. Dies kann durch Zugabe von Additiven zu Bindung der organischen Substanzen oder auch durch Chemikalien zur Erzielung von chemischen Reaktionen wie beispielsweise der Canizzaroreaktion zum Abbau von Formaldehyd auf chemischem Weg erfolgen. Ein weiterer Weg ist auch eine biologische Behandlung des Kreislaufwassers zur Senkung der organischen Schadstofffrachten und damit zur Aufrechterhaltung der Waschleistung. Ein wesentlicher Nachteil von Anlagen, die mittels chemischer Reaktionen die erforderliche Abwasserreinigung anstreben, ist der hohe Einsatz an Chemikalien sowie die für die Reaktion erforderliche Reaktionszeit.

Eine Alternative zu chemischen Nachbehandlungsverfahren sind biologische Nachbehandlungsverfahren. Eine Anordnung, welche auf Flotation und biologischer Reinigung basiert, wird z.B. in EP 0358006 A1 beschrieben. WO 92/00792 A1 offenbart ein Verfahren, bei dem ein Teil der Waschflüssigkeit aus dem geschlossenen Waschkreislauf entnommen wird und durch eine biologische Nachbehandlungseinheit geleitet wird, um organische Schadstoffe zu zersetzen, bevor die Waschflüssigkeit in den geschlossenen Kreislauf zurückgeleitet wird. Biologische Systeme können jedoch nicht im Sinne technischer Anlagen an- und ausgeschaltet werden und zeigen somit Schwächen bei Änderungen der Holzart bzw. Änderung der Last der vorgeschalteten Pressen und Trockner. Sie sind zudem sehr kostspielig in der Anschaffung und im Betrieb.

DE 36 35 934 C2 offenbart ein Reinigungsverfahren, in welchem die Abluft mit einer Waschflüssigkeit besprüht wird, welche mit Mikroorganismen angereichert wurde, und anschliessend durch ein elektrisches Hochspannungsfeld geleitet wird.

In DE 38 35 161 C2 wird vorgeschlagen, oxidierbare Verbindungen aus Prozessabgasen mittels eines nasschemischen katalytischen Kreisprozesses mit Luftsauerstoff in wässriger Lösung zu oxidieren. Hierfür sind jedoch Katalysatoren notwendig, die für die Umwelt problematisch sein können. Das Dokument diskutiert weitere Abluftreinigungsverfahren, darunter die thermische Nachbehandlung (Verbrennung). Diese hat den Nachteil, dass die Betriebskosten sehr hoch sind, wenn grosse Gasmengen mit geringem Schadstoffgehalt bei hohen Temperaturen umgesetzt werden müssen, wie das bei der Abluft aus der Holzverarbeitung in der Regel der Fall ist.

US 5,378,267 offenbart eine Anlage zur Entfernung organischer Verunreinigungen aus Wasser, in der Luft durch das Wasser geströmt wird.

### DARSTELLUNG DER ERFINDUNG

Es ist eine Aufgabe der vorliegenden Erfindung, eine energieeffiziente, leistungsfähige und kostengünstige Vorrichtung sowie ein solches Verfahren zur Reinigung von Abluft in der Holzwerkstoffindustrie zur Verfügung zu stellen.

Diese Aufgabe wird durch ein Verfahren nach Anspruch 1 bzw. eine Vorrichtung nach Anspruch 9 gelöst. Vorteilhafte Fortbildungen der Erfindung sind in den abhängigen Ansprüchen angegeben.

Es wird also ein Verfahren zur Reinigung von Abluft, insbesondere von Abluft aus der Verarbeitung von Holzwerkstoffen, z.B. aus einer Presse oder einem Trockner, angegeben.

Dieses weist einen ersten Kreislauf mit den folgenden Schritten auf
Waschen der Abluft durch eine Waschflüssigkeit, vorzugsweise durch eine Waschflüssigkeit auf Wasserbasis;
Trennen der Abluft und der Waschflüssigkeit;
Entfernen von Feststoffen aus der Waschflüssigkeit; und
Rückführung der Waschflüssigkeit zum Waschen der Abluft.

Um organische Substanzen, insbesondere flüchtige und wasserlösliche organische Substanzen wie Formaldehyd, Ameisensäure und/oder Essigsäure aus der Waschflüssigkeit zu entfernen, wird mindestens ein Teilstrom der Waschflüssigkeit aus dem ersten Kreislauf entnommen und einem zweiten Kreislauf zugeführt. Nach der Entfernung der organischen Substanzen wird die Waschflüssigkeit mindestens teilweise wieder in den ersten Kreislauf zurückgeführt.

Es wird also zunächst die Abluft erfasst, gesammelt und in einem Wäscher durch eine Waschflüssigkeit einer Staubabscheidung und einer Absorption der organischen Substanzen wie Formaldehyd, Ameisen- und Essigsäure unterzogen. Danach wird die Waschflüssigkeit vom Abluftgasstrom getrennt, z.B. in einem Wirbelsenkenabscheider (Zyklon) oder in einem Nasselektrofilter. Der so gereinigte Gasstrom kann danach direkt an die Umgebung abgegeben werden oder durch weitere Filter- oder Schallschutzmassnahmen abgeleitet werden, z.B. durch einen Kamin. Die beladene Waschflüssigkeit kann z.B. in einem Wiederaufbereitungsbehälter gesammelt werden. Dort kann sie von Feststoffen wie Schwebstoffen und Schlämmen gereinigt und dem Wäscher wieder zugeführt werden. Auch andere Massnahmen zur Abtrennung von Feststoffen sind denkbar. Erfindungsgemäss wird mindestens ein Teilstrom der Waschflüssigkeit aus diesem ersten Kreislauf abgezweigt und einer weiteren Aufbereitung zugeführt, um flüchtige organische Substanzen (VOCs) zu entfernen. Die Waschflüssigkeit wird danach zumindest teilweise wieder in den ersten Kreislauf zurückgeführt.

Falls ein Nasselektrofilter eingesetzt wird, kann der Wäscher auch in diesen integriert sein.

Die Entfernung der organischen Substanzen erfolgt mit Hilfe eines Desorbers, insbesondere eines sogenannten Kolonnendesorbers. Im Desorber werden die organischen Substanzen durch ein im Gleich- oder Gegenstrom zur Waschflüssigkeit geführtes Strippgas aus der Waschflüssigkeit entfernt ("gestrippt"). Gleichzeitig wird entsprechend das Strippgas mit den organischen Substanzen beladen. Beim Strippgas handelt es sich vorzugsweise um Luft. Es kann sich aber auch um ein anderes Gas handeln, z.B. Luft, der Stickstoff beigemischt wurde, um die Explosionsgefahr zu vermindern. Der Desorber kann z.B. als Sprühdesorber oder als Füllkörperdesorber mit einer geeigneten Packung ausgeführt sein, z.B. mit einer Packung aus Stahlkugeln oder Keramikteilen, wie dies an sich aus dem Stand der Technik bekannt ist. Der Desorber kann aber auch als Bodenkolonne ausgeführt sein. Auch Kombinationen von Bodenkolonnen, Sprüh- und Füllkörperdesorbern sind möglich.

Die Prozessparameter, insbesondere das im Gleich- oder Gegenstrom geführte Strippgas, wird vorzugsweise so eingestellt, dass das beladene Strippgas nach dem Verlassen des Desorbers eine höhere Konzentration organischer Substanzen als die Abluft aufweist, vorzugsweise eine mindestens fünfmal höhere Konzentration. Eine Konzentrationserhöhung um einen Faktor über 10 oder sogar 20 ist möglich. Insgesamt werden auf diese Weise also die organischen Substanzen aufkonzentriert. Somit braucht lediglich eine wesentlich geringere Gasmenge als die Gesamtabluftmenge der Presse oder eines Trockners einer Verbrennung zugeführt zu werden. Dadurch wird eine thermische Nachbehandlung bzw. Verbrennung der organischen Substanzen mit wesentlich geringerem Energieaufwand und mit höherer Effizienz möglich.

Die Prozessparameter können anhand der folgenden Überlegungen eingestellt werden: Abhängig vom zu minderndem organischen Schadstoff wird die Temperatur der Waschflüssigkeit beim Eintritt in den Desorber geeignet eingestellt. In der Praxis führt eine Eintrittstemperatur der Waschflüssigkeit von 80 °C häufig zu einer etwa 5 - 10-fach erhöhten Konzentration organischer Substanzen im beladenen Strippgas, im Vergleich zur Abluft. Relativ zur zu reinigenden Abluft sollte die Eintrittstemperatur der Waschflüssigkeit beim Eintritt in den Desorber um mindestens ca. 20 - 25 °C höher sein. Mit steigender Temperaturdifferenz zwischen der zu reinigenden Abluft und Eintrittstemperatur der Waschflüssigkeit am Desorber steigt bei gleicher Menge an Strippluft die Konzentration an organischen Schadstoffen in der Desorberabluft, abhängig vom jeweiligen Dampfdruck der organischen Substanz. Bei knapp unter 100 °C ist aus wirtschaftlichen Gründen eine weitere Steigerung nicht mehr sinnvoll, weil bei 100 °C das Wasser zu verdampfen beginnt und die dafür notwendige Verdampfungswärme sehr hoch ist.

Das Strippgas wird vorzugsweise vorgewärmt, bevor es im Desorber mit den organischen Substanzen beladen wird. Auf diese Weise kann eine deutlich erhöhte Beladung des Strippgases erreicht werden. Ein Teil des vorgewärmten, unbeladenen Strippgases oder weiteres vorgewärmtes Gas kann dem beladenen Strippgas beim oder nach dem Verlassen des Desorbers beigemischt werden, um die Wasserdampfkonzentration des beladenen Strippgases zu verringern. Auf diese Weise wird vermieden, dass in den nachfolgenden Rohrleitungen eine unerwünschte Kondensation des Wassers auftritt.

Auch die Waschflüssigkeit wird vorteilhaft vor dem Eintritt in den Desorber erwärmt. Um die Energieeffizienz zu verbessern, ist es von Vorteil, wenn die Waschflüssigkeit vor dem Eintritt in den Desorber in einem Wärmetauscher in thermischen Kontakt mit der den Desorber verlassenden Waschflüssigkeit gebracht wird, um die dem Desorber zugeführte Waschflüssigkeit zu erwärmen und die den Desorber verlassende Waschflüssigkeit zu kühlen. Durch dieses Wärmeverschiebungssystem wird ein beträchtlicher Anteil an Energie eingespart beziehungsweise zurückgewonnen. In einem weiteren Wärmeübertrager kann die Waschflüssigkeit mit zusätzlicher Energie aufgeheizt werden.

Zuvor kann die aus dem ersten Kreislauf abgezweigte Waschflüssigkeit optional vorbehandelt werden, um unerwünschte Ablagerungen in den Wärmetauschern und im Desorber zu vermindern. Beispielsweise kann durch einen Hydrozyklon die Belastung mit Feststoffen weiter vermindert werden.

Es hat sich aber gezeigt, dass trotz sorgfältiger Vorbehandlung der Waschflüssigkeit die Wärmetauscher durch feine Späne, Fasern, Paraffine usw. mit der Zeit verunreinigt werden und dann weniger effizient arbeiten. Es wird daher vorgeschlagen, mindestens einen Teil des zweiten Kreislaufs periodisch mit einer Spülflüssigkeit zu spülen. Bei der Spülflüssigkeit kann es sich insbesondere um Wasser oder eine Flüssigkeit auf Wasserbasis handeln. Vorzugsweise wird die Spülflüssigkeit dazu aufgeheizt. Die Fliessgeschwindigkeit der Spülflüssigkeit wird vorzugsweise höher eingestellt als die Fliessgeschwindigkeit der Waschflüssigkeit im Normalbetrieb. Die Spülflüssigkeit durchströmt vorzugsweise mindestens einen Teil des zweiten Kreislaufs in zum Normalbetrieb entgegengesetzter Richtung.

Es wird ausserdem eine Vorrichtung zur Reinigung von Abluft angegeben. Diese weist einen ersten Kreislauf auf, der mindestens die folgenden Elemente umfasst:
einen Wäscher zum Waschen der Abluft mit einer Waschflüssigkeit;
einen Tropfenabscheider (z.B. einen Wirbelsenkenabscheider), um die Abluft und die Waschflüssigkeit nach dem Waschen zu trennen;
einen Wiederaufbereitungsbehälter (z.B. ein Becken), um die abgetrennte Waschflüssigkeit zu sammeln und Feststoffe aus der Waschflüssigkeit zu entfernen; und
eine Zuführeinrichtung, um die Waschflüssigkeit vom Wiederaufbereitungsbehälter zum Wäscher zurückzuführen.

Die Vorrichtung weist ausserdem einen zweiten Kreislauf auf, der mindestens die folgenden Elemente umfasst:
eine Entnahmeleitung, um mindestens einen Teilstrom der Waschflüssigkeit aus dem ersten Kreislauf zu entnehmen;
einen Desorber, insbesondere einen Kolonnendesorber, zur Entfernung organischer Substanzen aus der entnommenen Waschflüssigkeit im Gleich- oder Gegenstrom mit einem Strippgas, und
eine Rückführleitung, um die Waschflüssigkeit nach der Entfernung der organischen Substanzen mindestens teilweise in den ersten Kreislauf zurückzuführen.

Für die Vorrichtung gelten sinngemäss dieselben Überlegungen wie für das oben dargestellte Verfahren.

Insbesondere kann der zweite Kreislauf einen Wärmeübertrager aufweisen, um das Strippgas vorzuwärmen, bevor es im Desorber mit den organischen Substanzen beladen wird, wie dies oben beschrieben wurde.

Es kann zudem eine Bypass Einrichtung vorgesehen werden, um einen Teil des vorgewärmten, unbeladenen Strippgases dem beladenen Strippgas beim oder nach dem Verlassen des Desorbers beizumischen und so die Wasserdampfkonzentration im Strippgas zu verringern, wie dies oben beschrieben wurde.

Es kann ein Wärmetauscher mit einer ersten Seite und einer zweiten Seite, die mit der ersten Seite in thermischem Kontakt steht, vorgesehen werden, wobei die die dem Desorber zugeführte Waschflüssigkeit durch die erste Seite geleitet wird, und wobei die den Desorber verlassende Waschflüssigkeit durch die zweite Seite geleitet wird. Dadurch kann die dem Desorber zugeführte Waschflüssigkeit erwärmt werden und die den Desorber verlassende Waschflüssigkeit gekühlt werden, wie dies oben beschrieben wurde.

Die Vorrichtung kann eine Spülflüssigkeitszuführung und Absperrelemente umfassen, um mindestens einen Teil des zweiten Kreislaufs mit einer Spülflüssigkeit zu spülen, wie dies oben beschrieben wurde. Die Vorrichtung kann zudem einen Wärmeübertrager aufweisen, um die Spülflüssigkeit zu erwärmen, wie dies ebenfalls schon oben diskutiert wurde.

Die Vorrichtung kann Mittel zur Zuführung des Strippgases nach dem Verlassen des Desorbers zu einer thermischen Nachbehandlung oder Verbrennung aufweisen. Der Vorrichtung kann ein Brenner nachgeschaltet sein, der das beladene Strippgas empfängt und verbrennt.

### KURZE BESCHREIBUNG DER ZEICHNUNG

Bevorzugte Ausführungsformen der Erfindung werden im Folgenden anhand der Zeichnung beschrieben, die lediglich zur Erläuterung dient und nicht einschränkend auszulegen ist. Es zeigt:
- Fig. 1: eine Anlage zur Reinigung der Abluft einer Presse für Holzwerkstoffe gemäss einem ersten Ausführungsbeispiel der Erfindung,
- Fig. 2: eine Anlage zur Reinigung der Abluft eines Trockners für Holzwerkstoffe gemäss einem zweiten Ausführungsbeispiel der Erfindung.

### BESCHREIBUNG BEVORZUGTER AUSFÜHRUNGSFORMEN

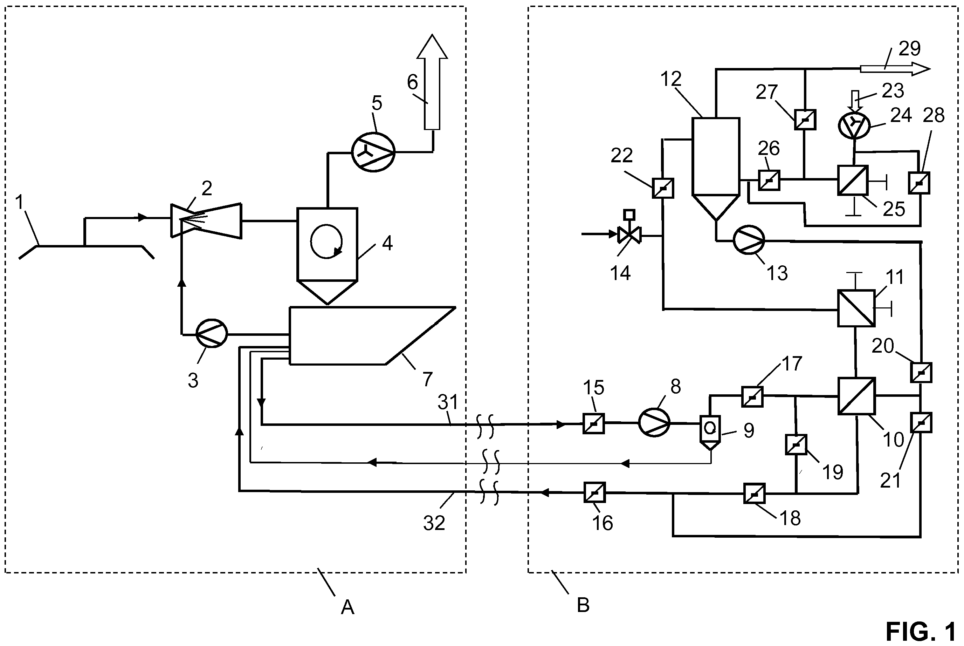

In der Fig. 1 ist eine Anlage zur Reinigung der Abluft einer Presse für Holzwerkstoffe gemäss einem ersten Ausführungsbeispiel der Erfindung dargestellt. Die Anlage besteht aus zwei Kreisen A und B, die räumlich voneinander entfernt sein können.

Der Kreis A bildet einen Waschkreis der Abluft. Er umfasst eine Absaugeinrichtung 1, mit der Abluft aus der Presse abgesaugt und gesammelt wird. Von dort gelangt die Abluft als Gasstrom in einen Absorber oder Wäscher 2. Hierbei kann es sich um einen Venturiwäscher handeln, es sind aber auch andere Ausführungen möglich, z.B. als Sprühdüsenwäscher, Wirbelstromnassabscheider oder Fallfilm-Filter. Im Wäscher 2 wird der Gasstrom mit einer Waschflüssigkeit in Kontakt gebracht, um eine Abscheidung von Stäuben und anderen festen und flüssigen Komponenten sowie eine Absorption von gasförmigen Komponenten aus dem Gasstrom zu erzielen. Bei der Waschflüssigkeit handelt es sich bevorzugt um Wasser, das optional mit an sich bekannten Zusätzen wie beispielsweise Tensiden und pH-Puffern versehen werden kann, um die Oberflächenspannung herabzusetzen, um die Löslichkeit für organische Verbindungen (insbesondere VOCs) zu verbessern, und/oder um die Waschflüssigkeit in einem gewünschten pH-Bereich zu halten.

In einem Flüssigkeits-Tropfenabscheider 4, der z.B. als Wirbelsenkenabscheider ausgeführt sein kann, werden die Waschflüssigkeit und die gereinigte Abluft nach dem Waschvorgang wieder getrennt. Der Gasstrom kann danach direkt über einen Ventilator 5 und einen Abluftkamin 6 an die Umgebung abgeleitet werden oder bei Bedarf vor der Ableitung durch zusätzliche Aggregate wie z.B. Feintropfenabscheider weiterbehandelt werden.

Die Waschflüssigkeit wird in einem Wiederaufbereitungsbecken 7 gesammelt und dort von Feststoffen gereinigt und danach dem Wäscher 2 über eine Kreislaufpumpe 3 wieder zugeführt.

Ein Teilstrom aus dem Kreis A wird über eine Entnahmeleitung 31 aus dem Wiederaufbereitungsbecken 7 abgezweigt und mittels einer Zuführpumpe 8 dem zweiten Kreis B zur weiteren Aufbereitung zugeführt. Dort wird zunächst über einen Wirbelsenkenabscheider (Hydrozyklon) 9 eventuell noch vorhandener Restfeststoff abgetrennt und zum Wiederaufbereitungsbecken 7 zurückgeführt oder getrennt gesammelt. Die so vorgereinigte Waschflüssigkeit wird dann in einem Wärmetauscher 10, der z.B. als Freistromplattenwärmetauscher ausgeführt sein kann, vorgewärmt. Dies geschieht mit dem Flüssigkeitsrücklauf des nachstehend noch näher beschriebenen Kolonnendesorbers 12.

In einem weiteren Wärmetauscher 11, der wiederum als Freistromplattenwärmetauscher ausgeführt sein kann, wird nun mit Zusatzenergie die Flüssigkeit auf das notwendige Temperaturniveau, vorzugsweise 80-95 °C, angehoben und in den Kolonnendesorber 12 geleitet.

Der Kolonnendesorber (Stripper) 12 kann z.B. als Sprüh- oder Füllkörperdesorber, als Bodenkolonne oder als Kombination aus Sprüh- und/oder Füllkörperdesorber und/oder Bodenkolonne ausgeführt sein. Die Wahl der Art des Kolonnendesorbers erfolgt in der Regel in Abhängigkeit vom Verschmutzungsgrad (die Verschmutzung kann durch die zu reinigende Flüssigkeit bzw. die Strippluft in das System eingebracht werden) bzw. dem noch akzeptieren Reinigungsintervall (meist händische Reinigung) für den Desorber. Am unempfindlichsten gegen Verschmutzung ist der Sprühdesorber, der aber leider die geringste Stoffaustauschfläche bei gleichem Platzbedarf (spezifische Stoffaustauschfläche) aller Bauformen für die Desorption besitzt. Daher wird meist der Sprühdesorber mit einer Füllkörperkolonne oder einer Bodenkolonne kombiniert, wobei die Düse auch für eine gleichmässige Berieselung der Füllkörper bzw. des ersten Bodens sorgt. Generell kann auch festgehalten werden, dass Bodenkolonnen unempfindlicher gegen Verschmutzung sind als Füllkörperkolonnen, allerdings auch eine geringere spezifische Stoffaustauschfläche als diese besitzen. Die Auswahl der Kolonnenbauform bzw. der sinnvollsten Kombination hängt daher im Wesentlichen von den jeweiligen Betriebsparametern, insbesondere der Verschmutzung über die Betriebsdauer, ab.

Dem Kolonnendesorber 12 wird über einen Ventilator 24 ein Gasstrom zugeführt, hier ein Luftstrom 23, der vor dem Einblasen in den Kolonnendesorber 12 über einen weiteren Wärmetauscher 25 vorgewärmt wird. Über eine Bypass-Einstellklappe 28, die den Wärmetauscher 25 überbrückt, und eine weitere Einstellklappe 26, die dem Wärmetauscher 25 nachgeschaltet ist, können die Volumenströme der vorgewärmten Luft bzw. der nicht vorgewärmten Luft getrennt eingestellt werden. Der Luftstrom wird im Gegenstrom zur Waschflüssigkeit in den Kolonnendesorber 12 eingeblasen. Dadurch werden organische Verbindungen, insbesondere VOCs, aus der Waschflüssigkeit entfernt (ausgestrippt) und vom Luftstrom aufgenommen. Der Luftstrom verlässt den Kolonnendesorber als Abluftstrom 29. Die verunreinigte Abluft kann ohne zusätzlichen Aufwand einer thermischen Nachbehandlung bzw. Verbrennung zugeführt werden, in welcher die organischen Substanzen thermisch zerstört werden.

Die so behandelte und gereinigte Waschflüssigkeit wird mittels einer Rückführpumpe 13 dem Wärmetauscher 10 zugeführt und gibt dort den grössten Teil ihrer latenten Wärme an die noch zu reinigende Waschflüssigkeit ab, bevor diese dem Kolonnendesorber 12 zugeführt wird. Die so abgekühlte Waschflüssigkeit wird über eine Rückführleitung 32 in das Wiederaufbereitungsbecken 7 zurückgeleitet.

Zusätzlich kann ein Teilstrom des im Wärmetauscher 25 erwärmten Luftstroms 23 über eine Einstellklappe 27 zum Abluftstrom 29 des Kolonnendesorbers 12 beigegeben werden, um den Taupunkt der Abluft so einzustellen, dass keine Kondensation in den nachfolgenden Rohrleitungen erfolgt.

Um aus dem Kreis B Verunreinigungen zu entfernen, die z.B. von sehr feinen Spänen, Fasern, nichtflüchtigen organischen Substanzen wie Paraffinen oder ähnlichem herrühren, kann der Kreis B periodisch gespült werden. Dazu sind eine Zuführung für eine Spülflüssigkeit, hier in Form eines Frischwasserventils 14, und Absperrelemente in Form von Klappen 15-22 vorgesehen, um eine Spülflüssigkeit (hier Frischwasser) mit erhöhter Strömungsgeschwindigkeit durch die Wärmetauscher 10, 11 und die Rohrleitungen zu leiten. Das Frischwasser kann dabei durch den Wärmetauscher 11 vorgewärmt werden.

Im vorliegenden Ausführungsbeispiel mündet das Frischwasserventil 14 in die Leitung vom zweiten Wärmetauscher 11 zum Kolonnendesorber 12. Um beispielsweise beide Seiten des Wärmetauschers 10 zu spülen, wird eine Klappe 22 zwischen dem Frischwasserventil 14 und dem Kolonnendesorber 12 geschlossen. Eine Klappe 17 am Ausgang des Hydrozyklons 9 wird geschlossen, um ein Eindringen von Spülwasser in den Hydrozyklon zu vermeiden. Ebenfalls werden eine Klappe 15 am Eingang des Hydrozyklons und eine Klappe 20 am Ausgang der Rückführpumpe 13 geschlossen. Auch eine Klappe 18 zwischen dem Ausgang der zweiten Seite des Wärmetauschers 10, an dem normalerweise die gereinigte Waschflüssigkeit zum Wiederaufbereitungsbecken 7 zurückgeführt wird, und dem Wiederaufbereitungsbecken 7 wird geschlossen. Eine Bypass-Klappe 19 zwischen dem Eingang der ersten Seite des Wärmetauschers 10, an dem normalerweise die zu erwärmende Waschflüssigkeit zugeführt wird, und dem Ausgang der zweiten Seite des Wärmetauschers 10 wird geöffnet. Auf dieser Weise kann Spülwasser zuerst entgegen der normalen Strömungsrichtung durch den Wärmetauscher 11, anschliessend durch die erste Seite des Wärmetauschers 10 und danach entgegen der normalen Strömungsrichtung durch die zweite Seite des Wärmetauschers 10 fliessen. Aus der zweiten Seite des Wärmetauschers 10 gelangt das Spülwasser über geöffnete Klappen 21 und 16 in das Wiederaufbereitungsbecken 7.

Der Kolonnendesorber 12 kann ebenfalls bedarfsweise gespült werden. Dazu werden die Klappen 15, 17, 18 und 19 geschlossen und die Klappen 16, 20, 21 und 22 geöffnet. Spülwasser kann nun vom Frischwasserventil 14 über die geöffnete Klappe 22 in den Kolonnendesorber strömen und diesen über die Pumpe 13 und die geöffneten Klappen 20, 21 und 16 in Richtung Wiederaufbereitungsbecken 7 verlassen.

Selbstverständlich können andere Klappenanordnungen gewählt werden, und das Frischwasserventil kann an anderer Stelle in den Kreis B münden. Auch können andere Spülflüssigkeiten als Wasser eingesetzt werden. Statt aus einer Presse kann die Abluft auch aus anderen Quellen aus der Holzverarbeitung stammen, z.B. aus einem Trockner.

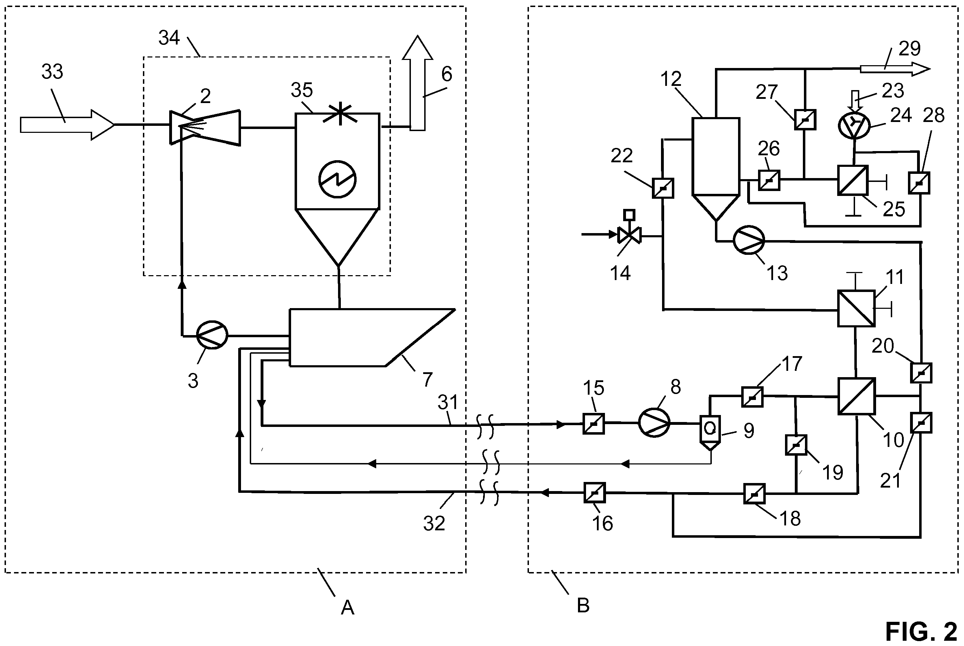

In der Fig. 2 ist eine Anlage zur Reinigung von Abluft aus der Holzverarbeitung gemäss einem zweiten Ausführungsbeispiel der Erfindung dargestellt. Der grundsätzliche Aufbau dieser Anlage ist sehr ähnlich zum Aufbau der Anlage der Fig. 1. Gleiche oder gleichwirkende Elemente dieser Anlage sind mit den gleichen Bezugszeichen wie in der Fig. 1 versehen.

Ein Abluftstrom 33, z.B. aus einem Trockner oder einer Presse, gelangt wie beim ersten Ausführungsbeispiel zunächst in einen Wäscher 2, der wie im ersten Ausführungsbeispiel z.B. als Venturiwäscher ausgeführt sein kann. In einem Nasselektrofilter 34 werden die Waschflüssigkeit und die gereinigte Abluft nach dem Waschvorgang wieder getrennt. Der Wäscher 2 kann auch in den Nasselektrofilter integriert sein; in diesem Fall repräsentiert die Einheit 35 einen beliebig ausgestalteten Nasselektrofilter mit integriertem Wäscher. Die abgetrennte Abluft kann danach wie im ersten Ausführungsbeispiel direkt über einen Abluftkamin 6 an die Umgebung abgeleitet werden oder bei Bedarf vor der Ableitung durch zusätzliche Aggregate wie z.B. Feintropfenabscheider weiterbehandelt werden. Die abgetrennte Waschflüssigkeit gelangt wie im ersten Ausführungsbeispiel in ein Wiederaufbereitungsbecken 7 und wird anschliessend wie im ersten Ausführungsbeispiel weiterbehandelt.

Nasselektrofilter (nasselektrostatische Abscheider) werden häufig zur Reinigung von mit klebrigen und mit teerartigen Substanzen beladener Abgasströme eingesetzt. Das Gas wird in einem Wäscher durch Eindüsen von Waschflüssigkeit (Kreislaufwasser) bis zum Sättigungspunkt abgekühlt und gelangt in den eigentlichen Filtereintritt. Dort wird es gleichmäßig über den Querschnitt verteilt. Danach strömt das Gas in ein Hochspannungsfeld mit Niederschlagselektroden und (meist zentrisch angeordneten) Sprühelektroden. Die im Gas befindlichen Partikel und Aerosole werden negativ aufgeladen und wandern im elektrischen Feld an die Niederschlagselektroden (meist Rohr-oder Wabenbündel). Periodische Spülungen gewährleisten die Reinhaltung der Niederschlagsflächen und Sprühelektroden. Nasselektrofilter werden häufig dort eingesetzt, wo Aerosol-Feststoff-Gemische mit hohem Wirkungsgrad abgeschieden werden müssen. Sie dienen insbesondere für die Abscheidung von Aerosolen, Feinstäuben, Harzdämpfen, "Blue Haze", Ölnebel und Gerüchen.

### BEZUGSZEICHENLISTE

- 1: Absaugeinrichtung
- 2: Wäscher
- 3: Kreislaufpumpe
- 4: Flüssigkeits-Tropfenabscheider
- 5: Ventilator
- 6: Abluftkamin
- 7: Wiederaufbereitungsbecken
- 8: Zuführpumpe
- 9: Wirbelabscheider
- 10: Wärmetauscher
- 11: Wärmetauscher
- 12: Kolonnendesorber
- 13: Rückführpumpe
- 14: Frischwasserventil
- 15-22: Absperrklappen
- 23: Luftstrom
- 24: Ventilator
- 25: Wärmetauscher
- 26-28: Einstellklappen
- 29: Abluftstrom
- 31: Entnahmeleitung
- 32: Rückführleitung
- 33: Gasstrom
- 34: kombinierte Einheit
- 35: Nasselektrofilter

## Patentansprüche

1. Verfahren zur Reinigung von Abluft, aufweisend einen ersten Kreislauf (A) mit den folgenden Schritten:
Waschen der Abluft durch eine Waschflüssigkeit auf Wasserbasis;
Trennen der Abluft und der Waschflüssigkeit;
Entfernen von Feststoffen aus der Waschflüssigkeit; und
Rückführung der Waschflüssigkeit zum Waschen der Abluft,
wobei mindestens ein Teilstrom der Waschflüssigkeit aus dem ersten Kreislauf (A) entnommen wird und einem zweiten Kreislauf (B) zugeführt wird, wobei im zweiten Kreislauf (B) organische Substanzen aus der Waschflüssigkeit entfernt werden und die Waschflüssigkeit nach der Entfernung der organischen Substanzen mindestens teilweise in den ersten Kreislauf (A) zurückgeführt wird,
**dadurch gekennzeichnet, dass** der zweite Kreislauf (B) mindestens die folgenden Schritte umfasst:
Zuführen der Waschflüssigkeit zu einem Desorber (12);
Entfernen von organischen Substanzen aus der Waschflüssigkeit im Desorber (12) durch ein im Gleich- oder Gegenstrom zur Waschflüssigkeit geführtes Strippgas, wobei das Strippgas (23) mit den organischen Substanzen beladen wird.

2. Verfahren nach Anspruch 1, wobei die Trennung der Abluft und der Waschflüssigkeit in einem Nasselektrofilter erfolgt.

3. Verfahren nach einem der vorhergehenden Ansprüche, wobei das beladene Strippgas nach dem Verlassen des Desorbers (12) einer thermischen Behandlung oder einer Verbrennung zugeführt wird.

4. Verfahren nach einem der vorhergehenden Ansprüche, wobei das Strippgas vorgewärmt wird, bevor es im Desorber (12) mit den organischen Substanzen beladen wird.

5. Verfahren nach Anspruch 4, wobei ein Teil des vorgewärmten, unbeladenen Strippgases dem beladenen Strippgas beim oder nach dem Verlassen des Desorbers (12) beigemischt wird, um die Wasserdampfkonzentration des beladenen Strippgases zu verringern.

6. Verfahren nach einem der vorhergehenden Ansprüche, wobei die Waschflüssigkeit vor dem Eintritt in den Desorber (12) erwärmt wird.

7. Verfahren nach Anspruch 6, wobei die Waschflüssigkeit vor dem Eintritt in den Desorber (12) in einem Wärmetauscher (10) in thermischen Kontakt mit der den Desorber (12) verlassenden Waschflüssigkeit gebracht wird, um die dem Desorber (12) zugeführte Waschflüssigkeit zu erwärmen und die den Desorber (12) verlassende Waschflüssigkeit zu kühlen.

8. Verfahren nach einem der vorhergehenden Ansprüche, wobei mindestens ein Teil des zweiten Kreislaufs (B) periodisch mit einer Spülflüssigkeit, vorzugsweise einer Spülflüssigkeit auf Wasserbasis, gespült wird.

9. Vorrichtung zur Reinigung von Abluft, mit einem ersten Kreislauf (A), der mindestens die folgenden Elemente umfasst:
einen Wäscher (2) zum Waschen der Abluft mit einer Waschflüssigkeit auf Wasserbasis;
einen Tropfenabscheider (4), um die Abluft und die Waschflüssigkeit nach dem Waschen zu trennen;
einen Wiederaufbereitungsbehälter (7), um die abgetrennte Waschflüssigkeit zu sammeln und Feststoffe aus der Waschflüssigkeit zu entfernen; und
eine Zuführeinrichtung (3), um die Waschflüssigkeit vom Wiederaufbereitungsbehälter (7) zum Wäscher (2) zurückzuführen,
wobei die Vorrichtung einen zweiten Kreislauf (B) aufweist, der mindestens die folgenden Elemente umfasst:
eine Entnahmeleitung (31), um mindestens einen Teilstrom der Waschflüssigkeit aus dem ersten Kreislauf (A) zu entnehmen; und
eine Rückführleitung (32), um die Waschflüssigkeit nach der Entfernung organischer Substanzen mindestens teilweise in den ersten Kreislauf (A) zurückzuführen,
**dadurch gekennzeichnet, dass** der zweite Kreislauf einen Desorber (12) zur Entfernung organischer Substanzen aus der entnommenen Waschflüssigkeit durch ein im Gleich- oder Gegenstrom zur Waschflüssigkeit geführtes Strippgas umfasst.

10. Vorrichtung nach Anspruch 9, wobei der Tropfenabscheider als Nasselektrofilter (35) ausgebildet ist.

11. Vorrichtung nach Anspruch 9 oder 10, mit einem Wärmeübertrager (25), um das Strippgas vorzuwärmen, bevor es im Desorber (12) mit den organischen Substanzen beladen wird.

12. Vorrichtung nach Anspruch 11, mit einer Bypass-Einrichtung (27), um einen Teil des vorgewärmten, unbeladenen Strippgases dem beladenen Strippgas beim oder nach dem Verlassen des Desorbers (12) beizumischen.

13. Vorrichtung nach einem der Ansprüche 9 bis 12, wobei der zweite Kreislauf (B) einen Wärmetauscher (10) mit einer ersten Seite und einer zweiten Seite, die mit der ersten Seite in thermischem Kontakt steht, umfasst, wobei die die dem Desorber (12) zugeführte Waschflüssigkeit durch die erste Seite geleitet wird, und wobei die den Desorber (12) verlassende Waschflüssigkeit durch die zweite Seite geleitet wird, um die dem Desorber (12) zugeführte Waschflüssigkeit zu erwärmen und die den Desorber (12) verlassende Waschflüssigkeit zu kühlen.

14. Vorrichtung nach einem der Ansprüche 9 bis 13, welche ausserdem Mittel zur Zuführung des Strippgases nach dem Verlassen des Desorbers zu einer thermischen Nachbehandlung oder Verbrennung aufweist.

## Claims

1. A method for purifying exhaust air comprising a first circulation (A) with the following steps:
scrubbing the exhaust air with a water-based scrubbing liquid;
separating the exhaust air and the scrubbing liquid;
removing solids from the scrubbing liquid; and
recirculating the scrubbing liquid for scrubbing the exhaust air,
wherein at least a substream of the scrubbing liquid is withdrawn from the first circulation (A) and
fed to a second circulation (B), wherein organic substances are removed from the scrubbing liquid in the second circulation (B), and the scrubbing liquid is at least partially recirculated to the first circulation (A) after removal of the organic substances,
**characterized in that** the second circulation (8) comprises at least the following steps:
feeding the scrubbing liquid to a desorber (12);
removing organic substances from the scrubbing liquid in the desorber (12) by a stripping gas,
which is carried in co-current or countercurrent with the scrubbing liquid, wherein the stripping gas (23) is loaded with the organic substances.

2. The method as claimed in claim 1, wherein the exhaust air and the scrubbing liquid are separated in a wet electrostatic filter.

3. The method as claimed in any one of the preceding claims, wherein, after leaving the desorber (12), the loaded stripping gas is fed to a thermal treatment or incineration.

4. The method as claimed in any one of the preceding claims, wherein the stripping gas is preheated before being loaded with the organic substances in the desorber (12).

5. The method as claimed in claim 4, wherein a portion of the preheated unloaded stripping gas is mixed with the loaded stripping gas during or after leaving the desorber (12) to reduce the water vapor concentration of the loaded stripping gas.

6. The method as claimed in any one of the preceding claims, wherein the scrubbing liquid is heated before entering the desorber (12).

7. The method as claimed in claim 6, wherein the scrubbing liquid, before entering the desorber (12), is brought into thermal contact in a heat exchanger (10) with the scrubbing liquid leaving the desorber (12), to heat the scrubbing liquid fed to the desorber (12) and to cool the scrubbing liquid leaving the desorber (12).

8. The method as claimed in any one of the preceding claims, wherein at least a portion of the second circulation (8) is rinsed periodically with a rinsing liquid, preferably a water-based rinsing liquid.

9. A device for purifying exhaust air with a first circulation (A), comprising at least the following elements:
a scrubber (2) for scrubbing the exhaust air with a water-based scrubbing liquid;
a droplet separator (4) to separate the exhaust air and the scrubbing liquid after scrubbing;
a reprocessing container (7) to collect the separated scrubbing liquid and to remove solids from the scrubbing liquid; and
a feed device (3) to return the scrubbing liquid from the reprocessing container (7) to the scrubber (2),
wherein the device has a second circulation (8), comprising at least the following elements:
a withdrawal line (31) to withdraw at least a substream of the scrubbing liquid from the first circulation (A); and
a recirculation line (32) for returning the scrubbing liquid at least partially to the first circulation (A) after removal of organic substances,
**characterized in that** the second circulation (8) comprises a desorber (12) for removing organic substances from the scrubbing liquid withdrawn, through a stripping gas carried in co-current or
countercurrent with the scrubbing liquid.

10. The device as claimed in claim 9, wherein the droplet separator is designed as a wet electrostatic filter (35).

11. The device as claimed in claim 9 or 10, having a heat exchanger (25) to preheat the stripping gas before it is loaded with the organic substances in the desorber (12).

12. The device as claimed in claim 11, having a bypass device (27) to mix a portion of the preheated unloaded stripping gas with the loaded stripping gas during or after leaving the desorber (12).

13. The device as claimed in any one of claims 9 to 12, wherein the second circulation (8) comprises a heat exchanger (10) having a first side and a second side, which is in thermal contact with the first side, wherein the scrubbing liquid fed to the desorber (12) is conducted through the first side, and wherein the scrubbing liquid leaving the desorber (12) is conducted through the second side, for heating the scrubbing liquid fed to the desorber (12) and for cooling the scrubbing liquid leaving the desorber (12).

14. The device as claimed in any one of claims 9 to 13, which also has means for feeding the stripping gas to a thermal aftertreatment or incineration after leaving the desorber.

## Revendications

1. Un procédé d'épuration d'air effluent, comprenant un premier circuit (A) qui comprend les étapes suivantes :
laver l'air effluent avec un liquide de lavage à base d'eau ;
séparer l'air effluent et le liquide de lavage ;
éliminer les solides du liquide de lavage ; et
retour du liquide de lavage pour le lavage d'air évacué,
dans lequel au moins un flux partiel du liquide de lavage est retiré du premier circuit (A) et
introduit dans un deuxième circuit (B), dans lequel dans le deuxième circuit (B) les substances organiques sont éliminées du liquide de lavage, et le liquide de lavage est au moins partiellement retourné vers le premier circuit (A) après l'élimination des substances organiques,
**caractérisé en ce que** le deuxième circuit (B) comprend au moins les étapes suivantes :
introduire le liquide de lavage dans un désorbeur (12);
éliminer les substances organiques du liquide de lavage dans le désorbeur (12) au moyen d'un gaz de stripping entraîné à co-courant ou à contre-courant avec le liquide de lavage,
dans lequel le gaz de stripping (23) est chargé de substances organiques.

2. Le procédé comme revendiqué dans la revendication 1, dans lequel l'air effluent et le liquide de lavage sont séparés dans un filtre électrostatique humide.

3. Le procédé comme revendiqué dans l'une quelconque des revendications précédentes, dans lequel, après avoir quitté le désorbeur (12), le gaz de stripping chargé est dirigé vers un traitement thermique ou d'incinération.

4. Le procédé comme revendiqué dans l'une quelconque des revendications précédentes, dans lequel le gaz de stripping est préchauffé avant d'être chargé avec les substances organiques dans le désorbeur (12).

5. Le procédé comme revendiqué dans la revendication 4, dans lequel une partie du gaz de stripping préchauffé non-chargé est mélangée au gaz de stripping chargé lors ou après avoir quitté le désorbeur (12) afin de réduire la concentration de vapeur d'eau du gaz de stripping chargé.

6. Le procédé comme revendiqué dans l'une quelconque des revendications précédentes, dans lequel le liquide de lavage est chauffé avant d'entrer dans le désorbeur (12).

7. Le procédé comme revendiqué dans la revendication 6, dans lequel le liquide de lavage, avant d'entrer dans le désorbeur (12), est mis en contact thermique avec le liquide de lavage sortant du désorbeur (12) dans un échangeur thermique (10), afin de chauffer le liquide de lavage entrant au désorbeur (12) et de refroidir le liquide de lavage sortant du désorbeur (12).

8. Le procédé comme revendiqué dans l'une quelconque des revendications précédentes, dans lequel au moins une partie du deuxième circuit (B) est rincée périodiquement avec un liquide de rinçage, de préférence un liquide de rinçage à base d'eau.

9. Un dispositif d'épuration d'air effluent ayant un premier circuit (A), qui comprend au moins les éléments suivants :
un scrubber (2) pour laver l'air effluent avec un liquide de lavage à base d'eau;
un séparateur de gouttelettes (4) pour séparer l'air effluent et le liquide de lavage après le lavage ;
un réservoir de retraitement (7) pour collecter le liquide de lavage séparé et éliminer les solides du liquide de lavage ; et
un dispositif d'alimentation (3) pour retourner le liquide de lavage du réservoir de retraitement (7) vers le scrubber (2),
dans lequel le dispositif comprend un deuxième circuit (B), qui comprend au moins les éléments suivants :
une conduite de soutirage (31) pour soutirer au moins un flux partiel du liquide de lavage du premier circuit (A) ; et
une conduite de retour (32) afin de retourner le liquide de lavage au moins partiellement vers le premier circuit (A) après élimination des substances organiques,
**caractérisé en ce que** le deuxième circuit (B) comprend un désorbeur (12) pour éliminer des substances organiques du liquide de lavage soutiré, au moyen d'un gaz de stripping entraîné à co-courant ou à contre-courant du liquide de lavage.

10. Le dispositif comme revendiqué dans la revendication 9, dans lequel le séparateur de gouttelettes est conçu comme un filtre électrostatique humide (35).

11. Le dispositif comme revendiqué dans la revendication 9 ou 10, comportant un échangeur de chaleur (25) pour préchauffer le gaz de stripping avant qu'il ne soit chargé en substances organiques dans le désorbeur (12).

12. Le dispositif comme revendiqué dans la revendication 11, comportant un dispositif de dérivation (27) pour mélanger une partie du gaz de stripping préchauffé et non chargé avec le gaz de stripping chargé à sa sortie ou après sa sortie du désorbeur (12).

13. Le dispositif comme revendiqué dans l'une quelconque des revendications 9 à 12, dans lequel le deuxième circuit (B) comprend un échangeur de chaleur (10) avec un premier côté et un deuxième côté, qui est en contact thermique avec le premier côté, dans lequel le liquide de lavage entrant le désorbeur (12) est conduit à travers le premier côté, et dans lequel le liquide de lavage sortant du désorbeur (12) est conduit à travers le deuxième côté, afin de chauffer le liquide de lavage entrant le désorbeur (12) et de refroidir le liquide de lavage sortant du désorbeur (12).

14. Le dispositif comme revendiqué dans l'une quelconque des revendications 9 à 13, qui comporte en outre des moyens d'alimentation du gaz de stripping vers un après-traitement thermique ou d'incinération, après sa sortie du désorbeur.
